# EUROPÄISCHE PATENTSCHRIFT

(11) **EP 3 378 050 B1**
(45) Veröffentlichungstag und Bekanntmachung des Hinweises auf die Patenterteilung: **05.07.2023**
(21) Anmeldenummer: 16787449.4
(22) Anmeldetag: 26.10.2016
(51) Int. Cl.: G08G 1/14, G08G 1/00

(54) **ÜBERGABE EINES PARKPLATZES**
TRANSFER OF A PARKING SPACE
TRANSFERT D'UNE PLACE DE STATIONNEMENT

(30) Priorität: 16.11.2015 DE 102015222566
(43) Veröffentlichungstag der Anmeldung: 26.09.2018
(73) Patentinhaber: Volkswagen Aktiengesellschaft, 38440 Wolfsburg (DE)
(72) Erfinder: JÖRDENS, Christian, 38126 Braunschweig (DE)
(86) Internationale Anmeldenummer: PCT/EP2016/075828
(87) Internationale Veröffentlichungsnummer: WO 2017/084844

(56) Entgegenhaltungen:
- EP-A1- 2 291 610
- WO-A1-2008/132520
- WO-A1-2015/059691
- WO-A1-2016/020142
- DE-A1-102009 054 292

## Beschreibung

Die vorliegende Erfindung betrifft die Übergabe eines freiwerdenden Parkplatzes von einem Fahrzeug an ein anderes.

Die Parkplatzsuche kostet bisweilen viel Zeit, so dass eine Hilfestellung beim Auffinden eines freien oder bald freiwerdenden Parkplatzes erwünscht ist.

Die WO 2015/059691 A1 beschreibt eine Parkauktion. Dabei wird beispielsweise mittels einer mobilen Einrichtung erfasst, dass es zu einem Parkplatzfreigabe-Ereignis für ein auf einem Parkplatz stehenden Fahrzeug kommen wird. Daraufhin wird unter sich in der Nähe des Parkplatzes befindenden Fahrzeugen, die einen Parkplatz suchen, eine Auktion veranstaltet. Dem Gewinner der Auktion werden Navigationsdaten übermittelt, um zu dem Parkplatz zu gelangen.

Die DE 10 2013 203 909 A1 beschreibt ein Verfahren zum Erkennen eines Parkplatzes für Kraftfahrzeuge. Dabei wird anhand der Position und Bewegung eines mobilen Endgeräts ein freigegebener Parkplatz erkannt. Dabei wird die Information über die Freigabe des Parkplatzes, erst an einen Server gesendet, wenn der Parkplatz tatsächlich freigegeben wird. Daher fehlt eine Art Vorwarnzeit, dass der Parkplatz freigegeben werden wird. Dadurch kann der Parkplatz bereits wieder besetzt sein, bevor ein Fahrzeug den Parkplatz erreicht, dass die Information über die Freigabe des Parkplatzes vom Server erhalten hat.

Die DE 10 2013 209 298 A1 offenbart ein System und ein Verfahren zum Erkennen von einem potenziell freiwerdenden Parkplatz. Dabei wird abhängig von bestimmten Signalen (beispielsweise einem Funksignal von einem Autoschlüssel) eine Wahrscheinlichkeit berechnet, dass ein Parkplatz in Kürze frei werden wird. Auch bei diesem System und diesem Verfahren ist die Vorwarnzeit, dass der Parkplatz freigegeben werden wird, sehr kurz, da sich der Fahrer bereits in unmittelbarer Nähe des Fahrzeugs befinden muss.

Die US 2013/0290045 A1 beschreibt ein Verfahren, welches anhand einer Annäherung eines von einem Fahrer getragenen Mobilgeräts an einen belegten Parkplatz die mögliche Freigabe dieses Parkplatzes erfasst. Bei diesem Verfahren besteht eine gewisse Fehler-Wahrscheinlichkeit, dass sich das Mobilgerät nur zufällig dem Parkplatz annähert und nicht, weil der Fahrer tatsächlich wegfahren will. In diesem Fall besteht die Gefahr, dass der Parkplatz als demnächst frei bezeichnet wird, ohne tatsächlich freigegeben zu werden.

Ausgehend von dem vorab skizzierten Stand der Technik stellt sich die vorliegende Erfindung die Aufgabe, die Information über einen freiwerdenden Parkplatz frühzeitiger zu erzeugen und dabei eine Fehler-Wahrscheinlichkeit zu senken.

Erfindungsgemäß wird diese Aufgabe durch ein Verfahren zur Übergabe eines Parkplatzes für ein Fahrzeug nach Anspruch 1 und durch ein System nach Anspruch 6 gelöst. Die abhängigen Ansprüche definieren bevorzugte und vorteilhafte Ausführungsformen der vorliegenden Erfindung.

Im Rahmen der vorliegenden Erfindung wird ein Verfahren zur Übergabe eines Parkplatzes für ein Fahrzeug bereitgestellt. Dabei umfasst das erfindungsgemäße Verfahren folgende Schritte:
- Erfassen einer Betätigung eines Mobilgeräts, welche signalisiert, dass sich der Fahrer des Fahrzeugs zu dem Parkplatz begeben wird.
- Erfassen der aktuellen Position des Mobilgeräts.
- Erfassen der aktuellen Position des Parkplatzes was z.B. mit Hilfe der E-Call-Einheit ("Emergency Call"-Einheit) des Fahrzeugs möglich ist. Die Position des Fahrzeugs wird dabei insbesondere erst kurz nach der Betätigung des Mobilgeräts ermittelt. Es ist aber auch möglich, dass das Fahrzeug zum Zeitpunkt der Belegung des Parkplatzes seine Position meldet und diese Position irgendwo (z.B. in einer Servereinrichtung) gespeichert wird. Der Schritt des Erfassens der aktuellen Position des Parkplatzes umfasst dann das Abrufen dieser gespeicherten Information.
- Abschätzen eines Zeitpunkts, zu welchem der Fahrer den Parkplatz erreichen wird, zumindest in Abhängigkeit von der Position des Mobilgeräts und der Position des Parkplatzes.

Durch das Erfassen der Betätigung, welche insbesondere von dem Fahrer selbst initiiert wird, wird vorteilhafterweise die Absicht des Fahrers erfasst, den Parkplatz in Kürze freizugeben. Dadurch werden Fehlinterpretationen vermieden, wenn sich beispielsweise das Mobilgerät aus anderen Gründen (nicht zur Freigabe des Parkplatzes) dem geparkten Fahrzeug bzw. Parkplatz nähert. Darüber hinaus kann erfindungsgemäß eine Vorwarnzeit für ein Parkplatz suchendes Fahrzeug relativ lang sein, da das erfindungsgemäße Verfahren im Gegensatz zum Stand der Technik quasi mit der Betätigung des Mobilgeräts startet. Dadurch weiß das erfindungsgemäße Verfahren bereits sehr früh, dass der Parkplatz freigegeben wird, auch wenn sich das Mobilgerät bei der Betätigung noch nicht in der Nähe des Parkplatzes befindet.

Das erfindungsgemäße Verfahren läuft unter anderem auf einer Servereinrichtung ab. Das Erfassen der Betätigung umfasst ein Erfassen einer Funkmeldung des Mobilgeräts von einer Servereinrichtung. Dabei wird die Funkmeldung von dem Mobilgerät insbesondere abgesetzt, wenn ein Bedienelement des Mobilgeräts betätigt wird.

Da das erfindungsgemäße Verfahren unter anderem auf einer Servereinrichtung ausgeführt wird, können vorteilhafterweise Informationen über freiwerdende Parkplätze über diese Servereinrichtung abgerufen werden.

Das erfindungsgemäße Verfahren umfasst folgende weitere Schritte:
- Bestimmen von Abmessungen des Parkplatzes.
- Ermitteln von suchenden Fahrzeugen, welche einen Parkplatz in der Nähe der Position des Parkplatzes suchen. Dazu kann sich jedes einen Parkplatz suchende Fahrzeug beispielsweise bei einer Servereinrichtung melden, welche dann ermitteln kann, welches der einen Parkplatz suchenden Fahrzeuge sich in der Nähe bzw. in einem vorbestimmten Abstand zu einem freiwerdenden Parkplatz befindet.
- Bestimmen oder Erfassen von Abmessungen des jeweiligen suchenden Fahrzeugs. Wenn jedes Fahrzeug seine Abmessungen kennt, können diese Abmessungen bei der entsprechenden Suchanfrage an die Servereinrichtung mitgeliefert werden.
- Bestimmen eines ausgewählten Fahrzeugs unter den suchenden Fahrzeugen abhängig von den jeweiligen Abmessungen des jeweiligen Fahrzeugs und den Abmessungen des Parkplatzes.

Dadurch kann sichergestellt werden, dass der Parkplatz an ein Fahrzeug übergeben wird, welches nicht zu groß für den Parkplatz ist. In diesem Fall wird das ausgewählte Fahrzeug derart bestimmt, dass seine Abmessungen unter Berücksichtigung von bestimmten Sicherheiten kleiner als die Abmessungen des Parkplatzes sind. Eine andere Variante ermöglicht, dass ein freiwerdender Parkplatz an ein suchendes Fahrzeug übergeben wird, dessen Abmessungen zum einen unter Berücksichtigung von bestimmten Sicherheiten kleiner als die Abmessungen des Parkplatzes sind und zum anderen aber nicht um mehr als einen vorbestimmten Schwellenwert (z.B. 1 m) kleiner als die Abmessungen des Parkplatzes sind. Dadurch kann vorteilhafterweise sichergestellt werden, dass ein vergleichsweise großer Parkplatz nicht von einem kleinen Fahrzeug eingenommen wird, falls ein größeres Fahrzeug in ähnlicher Nähe zum Parkplatz auch einen Parkplatz sucht. Mit anderen Worten kann durch diese Variante jedem suchenden Fahrzeug ein von den Abmessungen angemessener Parkplatz zugewiesen werden.

Erfindungsgemäß werden die Abmessungen des Parkplatzes mit Hilfe von Abstandssensoren des auf dem Parkplatz stehenden Fahrzeugs gemessen.

Die Abmessungen des Parkplatzes werden an die Servereinrichtung gemeldet, welche das ausgewählte Fahrzeug aus den suchenden Fahrzeugen auswählt.

Das Berücksichtigen der Abmessungen des Parkplatzes stellt sicher, dass das ausgewählte Fahrzeug auf den freiwerdenden Parkplatz passt.

Wenn das ausgewählte Fahrzeug einmal bestimmt worden ist, wird eine direkte bidirektionale drahtlose Kommunikationsverbindung zwischen dem Mobilgerät und Kommunikationsmitteln (z.B. einer E-Call-Einheit) innerhalb des ausgewählten Fahrzeugs eingerichtet. Dann werden weitere Informationen zur Übergabe des Parkplatzes direkt zwischen dem Mobilgerät und den Kommunikationsmitteln über diese eingerichtete direkte Kommunikationsverbindung ausgetauscht.

Das Einrichten der direkten Verbindung zwischen dem Mobilgerät und dem ausgewählten Fahrzeug bietet den Vorteil, dass die weiteren Informationen, umfassend die aktuelle Position des zu dem Parkplatz gehenden Fahrers oder die aktuelle Position des ausgewählten Fahrzeugs, rasch zwischen dem Mobilgerät und dem ausgewählten Fahrzeug ausgetauscht werden können. Der Umweg der Kommunikationsverbindung über ein Backend oder eine Servereinrichtung werden vermieden.

Gemäß dem erfindungsgemäßen Verfahren wird die Entfernung zwischen der Position des Mobilgeräts und der Position des Parkplatzes bestimmt und abhängig von dieser Entfernung der Zeitpunkt abgeschätzt, zu welchem der Fahrer den Parkplatz erreichen wird.

Die Entfernung zwischen dem Parkplatz und dem Mobilgerät ist ein guter Indikator für die Zeit, welche der Fahrer benötigt, um zu seinem geparkten Fahrzeug zu gelangen.

Die Kommunikation zwischen den suchenden Fahrzeugen (und insbesondere dem ausgewählten Fahrzeug) und der Servereinrichtung kann beispielsweise über die jeweilige E-Call-Einheit des jeweiligen suchenden oder ausgewählten Fahrzeugs erfolgen. Es ist aber auch möglich, dass die Kommunikation über ein Mobilgerät des jeweiligen Fahrers des jeweiligen suchenden oder ausgewählten Fahrzeugs erfolgt.

Neben der Bereitstellung einer Information über freiwerdende Parkplätze bietet die vorliegende Erfindung die Möglichkeit, einen freiwerdenden Parkplatz an ein bestimmtes oder ausgewähltes Fahrzeug zu übergeben. Dazu wird die Position des Parkplatzes frühzeitig (z. B. direkt nach der Betätigung des Mobilgeräts) an das ausgewählte Fahrzeug gemeldet, so dass dieses Fahrzeug vorzugsweise ausreichend Zeit hat, um zum Parkplatz zu fahren.

Gemäß einer weiteren bevorzugten Ausführungsform umfasst das Verfahren folgende weitere Schritte:
- Ermitteln von suchenden Fahrzeugen, welche einen Parkplatz in der Nähe der Position des Parkplatzes suchen. Dazu kann sich jedes einen Parkplatz suchende Fahrzeug beispielsweise bei einer Vorrichtung (Server) melden, welche dann ermitteln kann, welches der einen Parkplatz suchenden Fahrzeuge sich in der Nähe bzw. in einem vorbestimmten Abstand zu einem freiwerdenden Parkplatz befindet.
- Bestimmen für jedes suchende Fahrzeug eines weiteren Zeitpunkts, zu welchem das jeweilige suchende Fahrzeug die Position des Parkplatzes erreichen wird. Anhand der Position des jeweiligen suchenden Fahrzeugs kann beispielsweise mit Hilfe eines Navigationssystems bestimmt werden, wann das jeweilige Fahrzeug die Position des Parkplatzes erreichen wird, wodurch der weitere Zeitpunkt für jedes suchende Fahrzeug bestimmt wird.
- Abhängig von dem Zeitpunkt (zu dem der Fahrer den Parkplatz voraussichtlich erreichen wird) und den jeweiligen weiteren Zeitpunkten (zu denen die suchenden Fahrzeuge jeweils den Parkplatz voraussichtlich erreichen werden) wird ein ausgewähltes Fahrzeug aus den suchenden Fahrzeugen bestimmt. Wenn für jedes einen Parkplatz suchende Fahrzeug in der Nähe des freiwerdenden Parkplatzes der weitere Zeitpunkt bekannt ist, kann anhand des Weiteren Zeitpunkts und unter Berücksichtigung des Zeitpunkts das ausgewählte Fahrzeug sehr gut bestimmt werden. Insbesondere wird das ausgewählte Fahrzeug als dasjenige Fahrzeug bestimmt, welches die Position des Parkplatzes voraussichtlich zu einem ähnlichen Zeitpunkt (z.B. wenn der Betrag der Differenz von Zeitpunkt und weiterem Zeitpunkt für das jeweilige suchende Fahrzeug kleiner als ein vorbestimmter Zeit-Schwellenwert ist) erreichen wird, zu welchem der Parkplatz voraussichtlich frei werden wird. Ein solches Vorgehen erhöht die Chancen einer erfolgreichen Parkplatzübergabe.

Gemäß einer weiteren nicht beanspruchten Ausführungsform umfassen die Informationen zur Parkplatzübergabe weitere Informationen. Demgemäß könnte das erfindungsgemäße Verfahren ferner die folgenden Schritte aufweisen:
- Bestimmen von Informationen, welche das auf dem Parkplatz stehende Fahrzeug kennzeichnen. Diese Informationen können beispielsweise den Typ, die Farbe und das Kennzeichen des auf dem Parkplatz stehenden Fahrzeugs umfassen.
- Übermitteln der Informationen an das ausgewählte Fahrzeug. Die Übermittlung der Informationen kann dabei beispielsweise über die vorab beschriebene direkte Verbindung zwischen dem Mobilgerät und dem ausgewählten Fahrzeug übertragen werden.

Anhand der das Fahrzeug kennzeichnenden Informationen kann der Fahrer des ausgewählten Fahrzeugs leichter das Fahrzeug und damit den freiwerdenden Parkplatz ermitteln.

In ähnlicher Weise können die Informationen zur Parkplatzübergabe weitere nicht beanspruchte Informationen umfassen und könnte das erfindungsgemäße Verfahren ferner folgende Schritte umfassen:
- Bestimmen von Informationen, welche das ausgewählte Fahrzeug kennzeichnen. Auch diese Informationen können beispielsweise den Typ, die Farbe und das Kennzeichen des ausgewählten Fahrzeugs umfassen.
- Übermitteln der Informationen an das Mobilgerät. Auch bei dieser Übermittlung der Informationen kann die vorab beschriebene direkte Verbindung zwischen dem Mobilgerät und dem ausgewählten Fahrzeug eingesetzt werden.

Anhand der das ausgewählte Fahrzeug kennzeichnenden Informationen kann der Fahrer des den Parkplatz freigebenden Fahrzeugs das ausgewählte Fahrzeug erkennen. Dadurch wird die Wahrscheinlichkeit, dass der Parkplatz an das ausgewählte Fahrzeug (und kein anderes Fahrzeug) übergeben wird, erhöht.

Wenn der Parkplatzfreigeber (Fahrer des geparkten Fahrzeugs) das ausgewählte Fahrzeug und der neue Parkplatzbeleger (Fahrer des ausgewählten Fahrzeugs) das parkende Fahrzeug kennt, ist folgendes Vorgehen möglich. Der Parkplatzfreigeber steigt erst dann in sein geparktes Fahrzeug ein und fährt aus dem Parkplatz heraus, wenn der neue Parkplatzbeleger bereits blinkend hinter dem Parkplatz steht, wodurch eine sichere Übergabe des Parkplatzes erfolgt. Falls ein anderer Parkplatzsuchender auf dem Parkplatz parken möchte, signalisiert der Parkplatzfreigeber, dass er noch nicht wegfahren will. Auch dadurch wird die Wahrscheinlichkeit der sicheren Übergabe des Parkplatzes an das ausgewählte Fahrzeug erhöht.

Gemäß einer weiteren erfindungsgemäßen Ausführungsform umfasst das erfindungsgemäße Verfahren folgende Schritte:
- Erfassen einer Funkmeldung des ausgewählten Fahrzeugs, welche signalisiert, dass das ausgewählte Fahrzeug auf dem Parkplatz parkt. Diese Funkmeldung kann beispielsweise von dem ausgewählten Fahrzeug an die Servereinrichtung ausgesendet werden, wenn das ausgewählte Fahrzeug auf dem Parkplatz abgestellt wird.
- Speichern einer Information, dass der Parkplatz an das ausgewählte Fahrzeug vergeben worden ist. Die Servereinrichtung merkt sich anhand dieser Information, dass die Übergabe des Parkplatzes an das ausgewählte Fahrzeug erfolgreich durchgeführt worden ist. Eine solche Information ist beispielsweise für ein Bonus-System (siehe unten) oder zur Bewertung einer Effektivität der vorliegenden Erfindung nützlich.

Im Rahmen der vorliegenden Erfindung wird auch ein System zum Durchführen des erfindungsgemäßen Verfahrens bereitgestellt. Das System weist eine Servereinrichtung, das Fahrzeug, ein Mobilgerät und ein ausgewähltes Fahrzeug auf, welche jeweils Kommunikationsmittel zur drahtlosen Kommunikation und Steuermittel umfassen. Das System ist ausgestaltet, um eine Betätigung eines Mobilgeräts zu erfassen, welche signalisiert, dass sich der Fahrer eines geparkten Fahrzeugs zu dem Parkplatz bzw. Fahrzeug begibt. Weiter ist das System ausgestaltet, um eine Position des Mobilgeräts und eine Position des Fahrzeugs zu erfassen. Schließlich schätzt das System mit Hilfe der Steuermittel abhängig von der Position des Mobilgeräts und von der Position des Fahrzeugs einen Zeitpunkt ab, zu welchem der Fahrer den Parkplatz voraussichtlich erreichen wird.

Das erfindungsgemäße System umfasst alle Merkmale, die im Anspruch 6 aufgeführt sind, auch wenn sie im vorherigen Absatz nicht aufgeführt sind.

Die Betätigung des Mobilgeräts wird von der Servereinrichtung anhand einer entsprechenden Funkmeldung des Mobilgeräts erfasst. Auch die Position des Mobilgeräts wird anhand einer entsprechenden Funkmeldung des Mobilgeräts erfasst. Dabei kann es sich um dieselbe Funkmeldung handeln, welche zum einen die Betätigung und zum anderen die Position meldet. Die Vorteile des erfindungsgemäßen Systems entsprechen den Vorteilen des erfindungsgemäßen Verfahrens, welche vorab im Detail ausgeführt sind, so dass hier auf eine Wiederholung verzichtet wird.

Die Kommunikationsmittel der erfindungsgemäßen Servereinrichtung sind insbesondere auch zur drahtlosen Kommunikation mit dem Fahrzeug (beispielsweise über Mobilfunk) ausgestaltet. Dadurch ist die Servereinrichtung in der Lage, mittels der Steuermittel und der Kommunikationsmittel die Position des geparkten Fahrzeugs über eine entsprechende Funkanfrage an das Fahrzeug zu ermitteln oder zu bestimmen.

Erfindungsgemäß wäre es auch möglich, dass das (geparkte) Fahrzeug ständig seine Position an die Servereinrichtung meldet oder dass das geparkte Fahrzeug zumindest dann seine Position an die Servereinrichtung meldet, wenn es geparkt wird. Die Servereinrichtung wüsste dann ständig, wo sich die geparkten Fahrzeuge befinden, so dass der Schritt des Erfassens der Position des Parkplatzes quasi einer entsprechenden Abfrage in einem Speicher der Servereinrichtung entspricht. Ein solches Vorgehen ist allerdings aus Datenschutzgründen nachteilig, so dass die Abfrage der Position des Parkplatzes über eine Funkanfrage an das geparkte Fahrzeug bevorzugt wird. Eine solche Abfrage kann insbesondere nur dann durchgeführt werden, wenn der Fahrer durch die Betätigung seines Mobilgeräts signalisiert, dass er das erfindungsgemäße Verfahren jetzt einsetzen möchte. Mit anderen Worten ist gemäß dieser Ausführungsform die Position des geparkten Fahrzeugs der Servereinrichtung unbekannt, wenn der Fahrer sein Mobilgerät nicht betätigt.

Mit der vorliegenden Erfindung kann die Idee umgesetzt werden, einen Parkplatz erst dann freizugeben, wenn derjenige, der ihn bekommen soll, auch schon blinkend vor dem Parkplatz steht.

Die vorliegende Erfindung bietet folgende Vorteile:
- Die vorliegende Erfindung ermöglicht eine 1:1-Zuordnung zwischen einem Parkplatzfreigeber und einem neuen Parkplatzbeleger. Da nur das ausgewählte Fahrzeug (d.h. der neue Parkplatzbeleger) die Information über den freiwerdenden Parkplatz erhält ermöglicht dieses exklusive Wissen vorteilhafterweise eine hohe Sicherheit bei der Übergabe des Parkplatzes.
- Die Intension des Parkplatzfreigebers, seinen Parkplatz freizugeben, wird vorteilhafterweise durch die entsprechende Betätigung des Mobilgeräts sehr frühzeitig bekannt gegeben. Dadurch kann der Zeitpunkt, zu welchem die Parkplatzfreigabe erfolgt, deutlich früher ermittelt werden, als der Fahrer des geparkten Fahrzeugs in sein Fahrzeug steigt und den Parkplatz freigibt. Dadurch kann der Parkplatz auch an Fahrzeuge übergeben werden, welche sich zum Zeitpunkt der Betätigung des Mobilgeräts noch nicht in der Nähe des Parkplatzes befinden.
- Da sowohl der Parkplatzfreigeber das ausgewählte Fahrzeug als auch der neue Parkplatzbeleger das auf dem Parkplatz parkende Fahrzeug kennt, kann die Wahrscheinlichkeit einer erfolgreichen Übergabe des Parkplatzes erhöht werden. Mit einem nicht beanspruchten Bonussystem kann auch das Herauszögern der Parkplatzfreigabe durch den Parkplatzfreigeber gefördert werden, was die Wahrscheinlichkeit einer erfolgreichen Übergabe des Parkplatzes weiter erhöht.
- Durch das Bonussystem wird vorteilhafterweise ein Anreiz geschaffen, Parkplätze erfindungsgemäß zu übergeben und nicht nur erfindungsgemäß Parkplätze zu belegen.
- Die kontinuierliche Vermessung der aktuellen Parkplatzgröße ab dem Zeitpunkt der Betätigung des Mobilgeräts bis zur Freigabe des Parkplatzes erhöht die Chance, dass der Parkplatz nur an Fahrzeuge mit einer für den Parkplatz geeigneten Größe übergeben wird.

Die vorliegende Erfindung ist insbesondere für Kraftfahrzeuge geeignet. Selbstverständlich ist die vorliegende Erfindung nicht auf diesen bevorzugten Anwendungsbereich eingeschränkt, da die vorliegende Erfindung prinzipiell auch bei anderen Fortbewegungsmitteln (z.B. Schiffen, Flugzeugen, Fahrrädern, Motorrädern) eingesetzt werden kann.

Im Folgenden wird die vorliegende Erfindung anhand bevorzugter erfindungsgemäßer Ausführungsformen mit Bezug zu den Figuren im Detail beschrieben.

In Fig. 1 sind schematisch ein Fahrzeug, ein erfindungsgemäßes Mobilgerät und eine erfindungsgemäße Servereinrichtung dargestellt.

In Fig. 2 ist der Flussplan eines erfindungsgemäßen Verfahrens dargestellt.

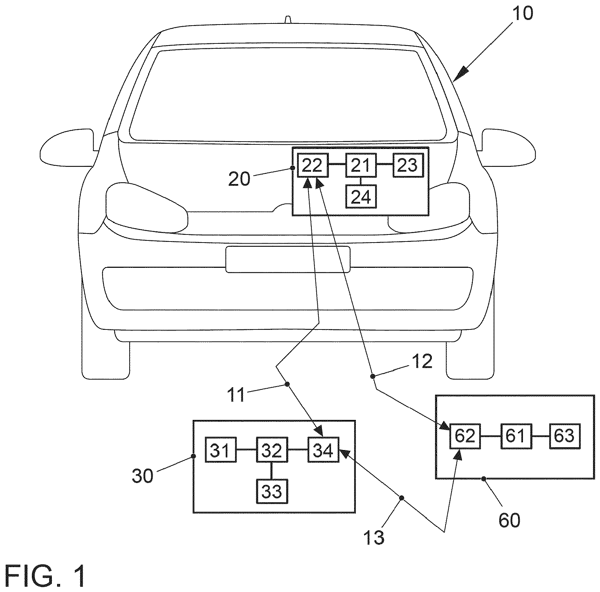

Fig. 1 zeigt ein Fahrzeug 10, welches eine Vorrichtung 20 umfasst. Die Vorrichtung 20 umfasst ihrerseits neben einer Steuerung 21, Kommunikationsmittel 22 zur drahtlosen Kommunikation (dabei kann es sich um eine E-Call-Einheit des Fahrzeugs 10 handeln), eine Anzeige 23 und einen GPS-Sensor 24. Darüber hinaus ist in Fig. 1 schematisch ein Mobilgerät 30, z.B. ein Smartphone, dargestellt, welches neben einer Steuerung 32 ein Bedienelement 31, einen GPS-Sensor 33 und Kommunikationsmittel 34 zur drahtlosen Kommunikation umfasst. Des Weiteren ist in Fig. 1 schematisch eine Servereinrichtung 60 dargestellt, welche neben einer Steuerung 61 Kommunikationsmittel 62 zur drahtlosen Kommunikation und einen Speicher 63 umfasst. Zusätzlich sind in der Fig. 1 drei drahtlose Kommunikationsverbindungen 11-13 dargestellt, welche das Fahrzeug 10 mit der Servereinrichtung 60, das Fahrzeug 10 mit dem Mobilgerät 30 und das Mobilgerät 30 mit der Servereinrichtung 60 verbinden.

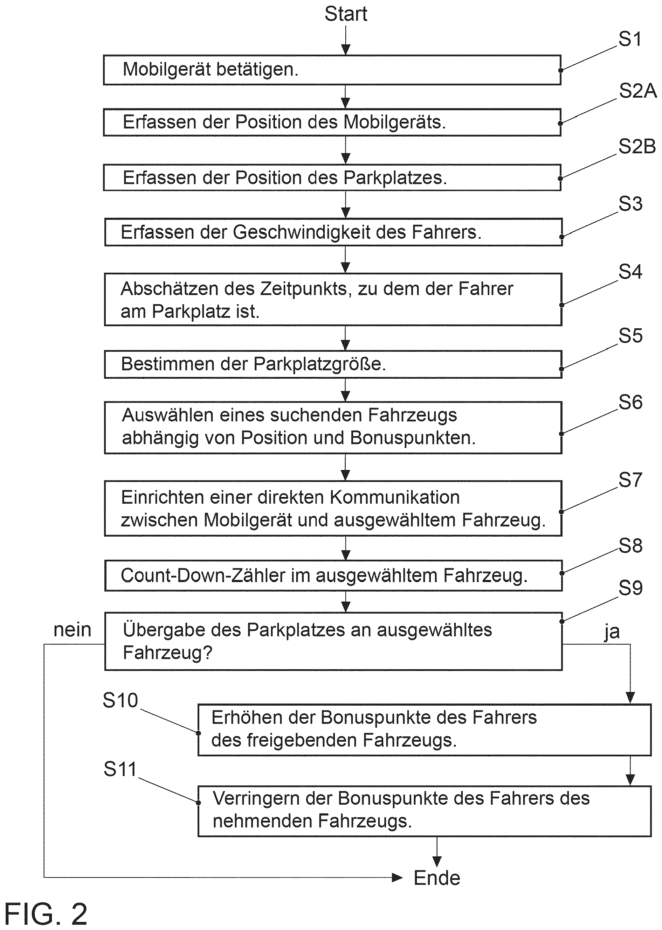

In Fig. 2 ist der Flussplan eines erfindungsgemäßen Verfahrens dargestellt.

Das erfindungsgemäße Verfahren startet, sobald ein Fahrer ein Bedienelement 31 seines Mobilgeräts 30 betätigt (siehe Schritt S1). Der Fahrer betätigt sein Mobilgerät 30, um zu signalisieren, dass er zu seinem geparkten Fahrzeug zurückkehren und den Parkplatz des Fahrzeugs freigegeben wird. Durch diese Betätigung wird eine entsprechende Applikation in dem Mobilgerät 30 gestartet, welche über eine drahtlose Kommunikationsverbindung 13 eine entsprechende Information an eine Servereinrichtung 60 sendet. Im folgenden Schritt S2 erfasst die Servereinrichtung 60 die Position des Mobilgeräts 30 und die Position des Fahrzeugs. Das Erfassen der Position des Mobilgeräts 30 kann dabei entweder durch eine entsprechende Funkabfrage seitens der Servereinrichtung 60 erfolgen, oder aber die Position des Mobilgeräts 30 ist Bestandteil der entsprechenden Information, welche vorher an die Servereinrichtung 60 gesendet wurde und mit welcher das Verfahren quasi startet. Die Position des Fahrzeugs wird von der Servereinrichtung 60 durch eine Funkabfrage beim Fahrzeug selbst abgefragt.

Im folgenden Schritt S3 wird die Schrittgeschwindigkeit beispielsweise anhand einer entsprechenden Funkabfrage beim Mobilgerät 30 erfasst. Anhand der Position des Mobilgeräts 30 und der Position des geparkten Fahrzeugs lässt sich der von dem Fahrer zurückzulegende Weg zum geparkten Fahrzeug ermitteln. Durch die Kenntnis der Schrittgeschwindigkeit des Fahrers kann nun der Zeitpunkt, zu dem der Fahrer voraussichtlich den Parkplatz erreichen wird, relativ gut bestimmt werden, wie es in Schritt S4 beschrieben ist.

Im Schritt S5 wird die Größe des Parkplatzes bestimmt. Wenn das geparkte Fahrzeug keine Sensorik (z.B. Parksensoren) besitzt, wird der Servereinrichtung 60 eine Information (z.B. der Fahrzeugtyp) gemeldet, anhand welcher die Größe des parkenden Fahrzeugs bestimmt werden kann. Wenn das geparkte Fahrzeug dagegen über eine entsprechende Sensorik (z.B. Ultraschallsensoren) verfügt, wird die Größe des Parkplatzes mit dieser Sensorik bestimmt. Dabei wird bei Längsparklücken insbesondere die Länge und bei Querparklücken insbesondere die Breite vermessen. Die Größe des Parkplatzes kann beispielsweise ab dem Zeitpunkt periodisch oder kontinuierlich gemessen werden, zu welchem der Fahrer des geparkten Fahrzeugs sein Mobilgerät betätigt (siehe Schritt S1). Dadurch kann die Größe des Parkplatzes aktualisiert werden, falls ein die Größe des Parkplatzes bestimmendes bzw. ein den Parkplatz begrenzendes Fahrzeug wechselt, wegfährt oder hinfährt.

Die Servereinrichtung 60 ermittelt nun im Schritt S6 aus den Fahrzeugen, welche bei der Servereinrichtung 60 registriert sind und aktuell einen Parkplatz suchen, ein möglichst passendes Fahrzeug aus. Dabei können folgende Kriterien berücksichtigt werden:
- Der Zeitpunkt, zu welchem das suchende Fahrzeug den Parkplatz erreichen wird, sollte zeitlich möglichst in der Nähe des Zeitpunkts liegen, zu welchem der Fahrer des geparkten Fahrzeugs voraussichtlich den Parkplatz erreichen wird. D.h. der Betrag des zeitlichen Abstands zwischen diesen beiden Zeitpunkten sollte kleiner als ein vorbestimmter Schwellenwert (z.B. 5 Minuten, besser 3 Minuten) sein.
- Die Abmessungen des Parkplatzes sollten ausreichend groß für das suchende Fahrzeug sein. Wenn die Größe des Parkplatzes ohne Sensorik bestimmt wurde, werden bei der weiteren Suche nur noch Fahrzeuge berücksichtigt, welche eine gleiche oder geringere Größe im Vergleich zur Größe des parkenden Fahrzeugs aufweisen. Wenn dagegen die Größe des Parkplatzes mit einer Sensorik des parkenden Fahrzeugs bestimmt wurde, werden für die weitere Suche nur noch Fahrzeuge berücksichtigt, für die die gemessene Parkplatzgröße ausreichend groß ist.
- Es können Bonuspunkte bei der Vergabe des freiwerdenden Parkplatzes berücksichtigt werden, was aber nicht Teil des beanspruchten Verfahrens ist.

Wenn beispielsweise für mehrere suchende Fahrzeuge der Parkplatz groß genug ist und der Zeitpunkt, zu welchen das jeweilige Fahrzeug den Parkplatz erreichen wird, in der Nähe des Zeitpunkts liegt, zu welchem der Fahrer des geparkten Fahrzeugs voraussichtlich den Parkplatz erreichen wird, kann der Fahrer des Fahrzeugs mit den meisten Bonuspunkten bevorzugt werden. Bonuspunkte erhält jeder Fahrer, welcher seinen Parkplatz erfolgreich mit dem erfindungsgemäßen Verfahren an einen anderen Fahrer übergibt. Darüber hinaus können Bonuspunkte für ein Warten auf das den Parkplatz übernehmende Fahrzeug vergeben werden.

Wenn im Schritt S6 aus den einen Parkplatz suchenden Fahrzeugen ein bestimmtes Fahrzeug 10 ausgewählt wird, wird im folgenden Schritt S7 eine direkte drahtlose Kommunikationsverbindung 11 zwischen dem Mobilgerät 30 und dem ausgewählten Fahrzeug 10 eingerichtet. Über diese direkte Kommunikationsverbindung 11 können Informationen (z.B. Fahrzeugmodell, Farbe und Kennzeichen) zwischen dem ausgewählten Fahrzeug 10 und dem Mobilgerät 30 ausgetauscht werden. Dadurch weiß der Fahrer des ausgewählten Fahrzeugs 10 genau, welchen Parkplatz er ansteuern muss. Der Fahrer des geparkten Fahrzeugs weiß, welchem Fahrzeug 10 er den Parkplatz zu übergeben hat.

Wenn sich das ausgewählte Fahrzeug 10 in der Nähe des Parkplatzes befindet oder wenn das ausgewählte Fahrzeug 10 bereits auf den Fahrer des geparkten Fahrzeugs wartet, kann im Schritt S8 ein Count-Down-Zähler auf der Anzeige 23 des ausgewählten Fahrzeugs 10 dargestellt werden. Mit diesem Count-Down-Zähler wird das Zeitintervall angegeben, nach welchem der Fahrer des geparkten Fahrzeugs voraussichtlich sein Fahrzeug erreichen wird.

Die Schritte S10 und S11 sind nicht Teil des beanspruchten Verfahrens und werden durchgeführt, wenn die Abfrage S9, ob die Übergabe des Parkplatzes an das ausgewählte Fahrzeug 10 erfolgreich war, positiv beantwortet wird. Dabei werden im Schritt S10 die Bonuspunkte des Fahrers, welcher den Parkplatz freigegeben hat, erhöht. Im Schritt 11 werden die Bonuspunkte des Fahrers des ausgewählten Fahrzeugs 10, welcher nun auf dem Parkplatz steht, verringert. Anschließend endet das erfindungsgemäße Verfahren, bis erneut ein Fahrer eines geparkten Fahrzeugs sein Mobilgerät betätigt. Wenn die Abfrage S9 negativ beantwortet wird, endet das erfindungsgemäße Verfahren, ohne dass Bonuspunkte erhöht oder verringert werden.

### Bezugszeichenliste

- 10: Fahrzeug
- 11-13: drahtlose Kommunikationsverbindung
- 20: Vorrichtung
- 21: Steuerung
- 22: Kommunikationsmittel
- 23: Anzeige
- 24: GPS-Sensor
- 30: Mobilgerät
- 31: Bedienelement
- 32: Steuerung
- 33: GPS-Sensor
- 34: Kommunikationsmittel
- 50: ausgewähltes Fahrzeug
- 60: Server
- 61: Steuerung
- 62: Kommunikationsmittel
- 63: Speicher
- S1-S11: Verfahrensschritt

## Patentansprüche

1. Verfahren zur Übergabe eines Parkplatzes auf dem ein Fahrzeug parkt mit folgenden Schritten:
Erfassen, mittels einer Servereinrichtung (60), einer Betätigung eines Mobilgeräts (30), welche signalisiert, dass sich ein Fahrer des Fahrzeugs zu dem Parkplatz begibt, einer Position des Mobilgeräts (30), und einer Position des Parkplatzes;
Abschätzen, mittels der Servereinrichtung (60), eines ersten Zeitpunkts, zu welchem der Fahrer den Parkplatz erreichen wird, zumindest abhängig von der Position des Mobilgeräts (30) und der Position des Parkplatzes;
Bestimmen, mittels Abstandssensoren des Fahrzeugs, von Abmessungen des Parkplatzes;
Ermitteln, mittels der Servereinrichtung (60), von suchenden Fahrzeugen, welche einen Parkplatz in der Nähe der Position des Parkplatzes suchen und von Abmessungen der jeweiligen suchenden Fahrzeuge; Bestimmen, mittels der Servereinrichtung (60), eines ausgewählten Fahrzeugs (10) aus den suchenden Fahrzeugen abhängig von den jeweiligen Abmessungen des jeweiligen Fahrzeugs und den Abmessungen des Parkplatzes;
Einrichten, mittels des Mobilgeräts (30) und Kommunikationsmitteln (22) innerhalb des ausgewählten Fahrzeugs (10), einer direkten bidirektionalen drahtlosen Kommunikationsverbindung (11); und
Austauschen von Informationen zur Übergabe des Parkplatzes, umfassend die aktuelle Position des Mobilgeräts (30) und die aktuelle Position des ausgewählten Fahrzeugs (10), zwischen dem Mobilgerät (30) und den Kommunikationsmitteln (22) über die bidirektionale drahtlose Kommunikationsverbindung (11).

2. Verfahren nach Anspruch 1, wobei das Erfassen der Betätigung ein Erfassen einer Funkmeldung des Mobilgeräts (30) umfasst.

3. Verfahren nach Anspruch 1 oder 2, weiter umfassend die Schritte der Servereinrichtung:
Bestimmen einer Entfernung zwischen der Position des Mobilgeräts (30) und der Position des Parkplatzes, und
Abschätzen des ersten Zeitpunkts abhängig von der Entfernung.

4. Verfahren nach einem der vorhergehenden Ansprüche wobei das Bestimmen eines ausgewählten Fahrzeugs (10) aus den suchenden Fahrzeugen ferner die Schritte umfasst:
Abschätzen pro suchendem Fahrzeug eines weiteren Zeitpunkts, zu welchem das jeweilige suchende Fahrzeug die Position erreichen wird; und
Bestimmen des ausgewählten Fahrzeugs (10) aus den suchenden Fahrzeugen abhängig von den jeweiligen Abmessungen des jeweiligen Fahrzeugs und den Abmessungen des Parkplatzes und abhängig von dem jeweiligen weiteren Zeitpunkt und dem ersten Zeitpunkt.

5. Verfahren nach einem der vorhergehenden Ansprüche, weiter umfassend die Schritte der Servereinrichtung (60):
Erfassen einer Funkmeldung des ausgewählten Fahrzeugs (10), welche signalisiert, dass das ausgewählte Fahrzeug (10) auf dem Parkplatz parkt, und
Speichern einer Information, dass der Parkplatz vergeben ist.

6. System zur Übergabe eines Parkplatzes auf dem ein Fahrzeug parkt das System aufweisend eine Servereinrichtung (60), das Fahrzeug, ein Mobilgerät (30) und ein ausgewähltes Fahrzeug 10), wobei die vorgenannten Systemkomponenten jeweils zur drahtlosen Kommunikation ausgestaltete Kommunikationsmittel (22, 34; 62), und
Steuermittel (21, 32; 61) aufweisen und wobei das Fahrzeug ferner Abstandssensoren zum Erfassen von Abmessungen des Parkplatzes aufweist,
wobei die Servereinrichtung (60) dazu ausgestaltet ist:
eine Betätigung eines Mobilgeräts (30) zu erfassen, welche signalisiert, dass sich ein Fahrer des geparkten Fahrzeugs zu dem Parkplatz begibt,
eine Position des Mobilgeräts (30) und eine Position des Fahrzeugs zu erfassen, zumindest abhängig von der Position des Mobilgeräts (30) und von der Position des Fahrzeugs einen Zeitpunkt abzuschätzen, zu welchem der Fahrer den Parkplatz erreichen wird,
suchende Fahrzeuge, welche einen Parkplatz in der Nähe der Position suchen, und Abmessungen der jeweiligen suchenden Fahrzeuge zu ermitteln, und
ein ausgewähltes Fahrzeug (10) aus den suchenden Fahrzeugen abhängig von den jeweiligen Abmessungen des jeweiligen Fahrzeugs und den Abmessungen des Parkplatzes zu bestimmen, und
wobei das Mobilgerät (30) und das ausgewählte Fahrzeug (10) dazu ausgestaltet sind:
eine direkte bidirektionale drahtlose Kommunikationsverbindung (11) zwischen einander einzurichten und Informationen zur Übergabe des Parkplatzes,
umfassend die aktuelle Position des Mobilgeräts (30) und die aktuelle Position des ausgewählten Fahrzeugs (10), über die bidirektionale drahtlose Kommunikationsverbindung (11) auszutauschen.

7. System nach Anspruch 6, wobei die Servereinrichtung ferner dazu ausgestaltet ist, mittels der Steuermittel (61) und der Kommunikationsmittel (62) die Position des Fahrzeugs über eine Funkanfrage an das Fahrzeug zu bestimmen.

## Claims

1. Method for transferring a parking space in which a vehicle is parked, having the following steps:
detecting, by means of a server device (60), operation of a mobile device (30) signalling that a driver of the vehicle is going to the parking space, a position of the mobile device (30), and a position of the parking space;
estimating, by means of the server device (60), a first time at which the driver will reach the parking space, at least on the basis of the position of the mobile device (30) and the position of the parking space;
determining, by means of distance sensors of the vehicle, dimensions of the parking space;
identifying, by means of the server device (60), seeking vehicles looking for a parking space close to the position of the parking space, and dimensions of the respective seeking vehicles;
determining, by means of the server device (60), a selected vehicle (10) from the seeking vehicles on the basis of the respective dimensions of the respective vehicle and the dimensions of the parking space;
setting up, by means of the mobile device (30) and communication means (22) inside the selected vehicle (10), a direct two-way wireless communication connection (11); and
exchanging information relating to transfer of the parking space, comprising the present position of the mobile device (30) and the present position of the selected vehicle (10), between the mobile device (30) and the communication means (22) by way of the two-way wireless communication connection (11).

2. Method according to Claim 1, wherein the detection of operation comprises detection of a radio message from the mobile device (30).

3. Method according to Claim 1 or 2, further comprising the steps by the server device of:
determining a distance between the position of the mobile device (30) and the position of the parking space, and
estimating the first time on the basis of the distance.

4. Method according to one of the preceding claims, wherein the determination of a selected vehicle (10) from the seeking vehicles further comprises the steps of:
estimating for each seeking vehicle a further time at which the respective seeking vehicle will reach the position; and
determining the selected vehicle (10) from the seeking vehicles on the basis of the respective dimensions of the respective vehicle and the dimensions of the parking space and on the basis of the respective further time and the first time.

5. Method according to one of the preceding claims, further comprising the steps by the server device (60) of:
detecting a radio message from the selected vehicle (10) signalling that the selected vehicle (10) is parked in the parking space, and
storing information indicating that the parking space is spoken for.

6. System for transferring a parking space in which a vehicle is parked, the system comprising a server device (60), the vehicle, a mobile device (30) and a selected vehicle (10), the aforementioned system components each comprising communication means (22, 34; 62), designed for wireless communication, and control means (21, 32; 61), and the vehicle further comprising distance sensors for detecting dimensions of the parking space,
wherein the server device (60) is designed:
to detect operation of a mobile device (30) signalling that a driver of the parked vehicle is going to the parking space,
to detect a position of the mobile device (30) and a position of the vehicle,
to take at least the position of the mobile device (30) and the position of the vehicle as a basis for estimating a time at which the driver will reach the parking space,
to identify seeking vehicles looking for a parking space close to the position, and dimensions of the respective seeking vehicles, and
to determine a selected vehicle (10) from the seeking vehicles on the basis of the respective dimensions of the respective vehicle and the dimensions of the parking space, and
wherein the mobile device (30) and the selected vehicle (10) are designed:
to set up a direct two-way wireless communication connection (11) between one another and to exchange information relating to transfer of the parking space, comprising the present position of the mobile device (30) and the present position of the selected vehicle (10), by way of the two-way wireless communication connection (11).

7. System according to Claim 6, wherein the server device is further designed to use the control means (61) and the communication means (62) to determine the position of the vehicle by way of a radio query to the vehicle.

## Revendications

1. Procédé permettant de transférer une place de stationnement sur laquelle est garé un véhicule, comprenant les étapes suivantes consistant à :
détecter, au moyen d'un dispositif serveur (60), un actionnement d'un appareil mobile (30) qui signale qu'un conducteur du véhicule se rend à la place de stationnement, une position de l'appareil mobile (30) et une position de la place de stationnement ;
estimer, au moyen du dispositif serveur (60), un premier instant auquel le conducteur atteindra la place de stationnement, au moins en fonction de la position de l'appareil mobile (30) et de la position de la place de stationnement ;
déterminer, au moyen de capteurs de distance du véhicule, les dimensions de la place de stationnement ;
découvrir, au moyen du dispositif serveur (60), des véhicules en recherche qui recherchent une place de stationnement à proximité de la position de la place de stationnement, et les dimensions des véhicules en recherche respectifs ;
déterminer, au moyen du dispositif serveur (60), un véhicule sélectionné (10) parmi les véhicules en recherche en fonction des dimensions respectives du véhicule respectif et des dimensions de la place de stationnement ;
établir, au moyen de l'appareil mobile (30) et de moyens de communication (22) à l'intérieur du véhicule sélectionné (10), une liaison de communication sans fil bidirectionnelle directe (11) ; et
échanger des informations concernant le transfert de la place de stationnement, comprenant la position actuelle de l'appareil mobile (30) et la position actuelle du véhicule sélectionnée (10), entre l'appareil mobile (30) et les moyens de communication (22) par la liaison de communication sans fil bidirectionnelle (11).

2. Procédé selon la revendication 1, dans lequel la détection de l'actionnement comprend une détection d'un message radio de l'appareil mobile (30).

3. Procédé selon la revendication 1 ou 2, comprenant en outre les étapes du dispositif serveur consistant à :
déterminer une distance entre la position de l'appareil mobile (30) et la position de la place de stationnement, et
estimer le premier instant en fonction de la distance.

4. Procédé selon l'une quelconque des revendications précédentes, dans lequel la détermination d'un véhicule sélectionné (10) parmi les véhicules en recherche comprend en outre les étapes consistant à :
estimer pour chaque véhicule en recherche un autre instant auquel le véhicule respectivement en recherche atteindra la position ; et
déterminer le véhicule sélectionné (10) parmi les véhicules en recherche en fonction des dimensions respectives du véhicule respectif et des dimensions de la place de stationnement et en fonction de l'autre instant respectif et du premier instant.

5. Procédé selon l'une quelconque des revendications précédentes, comprenant en outre les étapes du dispositif serveur (60) consistant à :
détecter un message radio du véhicule sélectionné (10) qui signale que le véhicule sélectionné (10) se gare sur la place de stationnement, et mémoriser une information que la place de stationnement est prise.

6. Système permettant de transférer une place de stationnement sur laquelle est garé un véhicule, le système présentant
un dispositif serveur (60), le véhicule, un appareil mobile (30) et un véhicule sélectionné (10), dans lequel lesdits composants de système présentent des moyens de communication (22, 34 ; 62) respectivement configurés pour une communication sans fil, et des moyens de commande (21, 32 ; 61), et dans lequel le véhicule présente en outre des capteurs de distance pour détecter les dimensions de la place de stationnement,
dans lequel le dispositif serveur (60) est configuré pour :
détecter un actionnement d'un appareil mobile (30) qui signale qu'un conducteur du véhicule garé se rend à la place de stationnement,
détecter une position de l'appareil mobile (30) et détecter une position du véhicule
estimer au moins en fonction de la position de l'appareil mobile (30) et de la position du véhicule un instant auquel le conducteur atteindra la place de stationnement,
découvrir des véhicules en recherche qui recherchent une place de stationnement à proximité de la position, et les dimensions des véhicules en recherche respectifs, et
déterminer un véhicule sélectionné (10) parmi les véhicules en recherche en fonction des dimensions respectives du véhicule respectif et des dimensions de la place de stationnement, et
dans lequel l'appareil mobile (30) et le véhicule sélectionné (10) sont configurés pour :
établir une liaison de communication sans fil bidirectionnelle directe (11) entre eux et échanger des informations concernant le transfert de la place de stationnement, comprenant la position actuelle de l'appareil mobile (30) et la position actuelle du véhicule sélectionné (10), par la liaison de communication sans fil bidirectionnelle (11).

7. Système selon la revendication 6, dans lequel le dispositif serveur est en outre configuré pour déterminer à l'aide des moyens de commande (61) et des moyens de communication (62) la position du véhicule par l'intermédiaire d'une demande radio adressée au véhicule.
